# EUROPEAN PATENT APPLICATION

(11) **EP 1 225 499 A2**
(43) Date of publication of application: **24.07.2002**
(21) Application number: 02001012.0
(22) Date of filing: 17.01.2002
(51) Int. Cl.: G06F 1/00

(54) **Data processor for processing data with a digital signature**

(30) Priority: 19.01.2001 JP 2001011247; 19.01.2001 JP 2001011254; 19.01.2001 JP 2001011248
(71) Applicant: MATSUSHITA ELECTRIC INDUSTRIAL CO., LTD., Kadoma-shi, Osaka-fu (JP)
(72) Inventor: Kobayashi, Takuya, Neyagawa-shi, Osaka-fu (JP); Inami, Satoshi, Moriguchi-shi, Osaka-fu (JP); Mizuyama, Masashige, Neyagawa-shi, Osaka-fu (JP); Kato, Atsunobu, Ebina-shi, Kanagawa-ken (JP); Shin, Hidehiko, Moriguchi-shi, Osaka-fu (JP); Wada, Hiromi, Neyagawa-shi, Osaka-fu (JP)
(74) Representative: Lang, Johannes, Dipl.-Ing.

(57) **Abstract**

Command data (111) includes an address of terminal data (112) to be received. A data processor (100) first verifies a signature applied to the received command data (111), and then receives the terminal data (112) specified by the command data (111). Thus received terminal data is used for controlling the data processor (100) such as screen display. At this time, the received data may be segmented into a protected data region and an unprotected data region, and any data type included in the unprotected data region may be listed as an unprotection list. If listed, the unprotection list may be arranged in the protected data region. Alternatively, a signer certificate may indicate, by type, what data is signable by its signer, and at the time of data reception, determination may be made whether the signer has an authorization for signing the data classified under the type.

## Description

### BACKGROUND OF THE INVENTION

### Field of the Invention

The present invention relates to data processors and, more specifically, to data processors for processing data with a digital signature coming from a server connected over a network.

### Description of the Background Art

In recent years, the number of computers connected over the Internet has been rapidly increasing, and WWW (World Wide Web; simply "Web" in the below) browsing has become very popular through mobile phones, for example. As to data processors for Web browsing, various technologies have been known.

A first technique is relating to a JAVA applet. The JAVA applet is a program written in JAVA, and operating on various devices connected over the network. The user uses browser software to download such a JAVA applet for execution. The issue here is, it is considered inappropriate in view of system safety that the JAVA applet which is freely downloadable accesses device peripheral equipment or reads/writes from/to I/O ports of the device. Thus, the JAVA applet is allowed to limitedly access predetermined data in the device, and this means that the JAVA applet is generally not allowed to access device peripheral equipment or read/write from/to I/O ports. As a technique to enable the JAVA applet to access peripheral equipment, Japanese Patent Laid-Open Publication No. 2000-112864 discloses as incorporating in advance a driver of the peripheral equipment into a library used by the JAVA applet.

A second technique is relating to digital signature. Web browsing has been conventionally for content download and display, and recently for online shopping and online trading, and the like. To exchange data for such commercial purpose, data transmission/reception requires much higher reliability. Thus, at data reception, the identity of the sender of the data and any possibility of data tampering due to hacking done by outsiders have to be checked, and if the data is found erroneous, the data should not be processed. As a method of insuring the high reliability for data transmission/reception, the following digital signature system using public key cryptosystem has been known.

In such a digital signature system, a device on the transmission end hashes transmitting data (hereinafter, refers to as "text") using one-way function. The resultant hash value is encrypted using a private key, and thus encrypted result is referred to as a "signature". The device on the transmission end then attaches this signature and a public key which is paired off with the private key to the text for transmission. On the reception end, the received text is hashed using one-way function, and the signature attached to the text is decrypted using the public key which is also attached to the text. Through comparison between the result derived by decrypting the signature and the result by hashing the text, if those are the same, the text is transmitted from the transmission end having the private key, and the text is also proved that no data tampering has occurred thereto during communications.

In this system, the text is hashed in its entirety using one-way function at the time of signature generation and authentication. Thus, if the text is large in data amount, the processing load is increased, and resultantly the processing time takes longer. This causes a problem for mobile units which are relatively low in processing capacity. For betterment, instead of hashing the text in its entirety, there is a method which is conventionally known to hash only any significant part which should not be tampered. In this method, data is first arranged separately in a part to be hashed for signature generation (hereinafter, refers to as "protected data region" in view of protecting it from tampering), and a part not to be hashed (hereinafter, refers to as "unprotected data region"). And only the data included in the protected data region is used for signature generation and authentication. That is, the data included in the protected data region is checked for any possibility of tampering using digital signature, and the data in the unprotected data region is not checked for digital signature. In this manner, compared with the case where the text is checked in its entirety for digital signature, the processing load and the processing time can be suppressed.

A third technique is relating to signature authorization control for digital signature. This signature authorization control is done to control which data can be signed by which signer, and is considered quite important in terms of system design. However, there is no method so far of controlling signature authorization based on data type. Therefore, most of the time, information about which signer is authorized to sign what data type has been implicitly and proprietarily determined on a system basis. Also, certificates are roughly classified under classes and usage provided by certificate authorities, and their interpretations are appropriately defined on an application basis.

However, those conventional technologies do not solve the following problems associated with data processors for Web browsing. As to the technology relating to the JAVA applet, the method disclosed in the above mentioned publication is not applicable to devices such as mobile phones and portable information terminals. This is because, such devices cannot be newly provided with a JAVA library once shipped, and the JAVA library for accessing peripheral equipment has to be previously incorporated before shipped. By doing so, however, every user is allowed to use such a JAVA library for accessing other users' peripheral equipment. For example, the mobile phones store user's personal information such as telephone numbers and addresses. No authorized user should not be allowed to access such personal information. In this viewpoint, the method in the above publication is not applicable to devices such as mobile phones to which no JAVA library can be newly provided once shipped.

As to the technique relating to digital signature, by separately arranging the text into the protected data region and the unprotected data region, the load of applications on the reception end is resultantly increased. This is because, the reception end has to always make it clear for the received data, whether it has been included in the protected data region or the unprotected data region for processing. For example, on the reception end, in the case where the data which is supposed to be in the protected data region is found in the unprotected data region, the data should not be processed in the same manner as to the case where the data is in the protected data region. On the reception end, application programs are used to clarify from which data region the data has come. Accordingly, in this method of segmenting data region, the load of the applications on the reception end is increased when the data is large in data amount.

To solve this problem, there is a possibility of determining in advance, with mutual understanding between the transmission and reception ends, what data should go to which data region, i.e., the protected data region, and the unprotected data region. In such a manner as fixedly determining the protected and unprotected data regions, however, if the data is changed in its significance, that is, if the data so far included in the unprotected data region needs to be included in the protected data region not to be tampered, applications on the reception end have to be changed. Therefore, data cannot be freely added or changed in state, protected or unprotected.

As to the technique relating to signature authorization control, data requiring high reliability has been recently increasing in type, exemplified by data for e-commerce. Accordingly, no matter what type and how many, there requires to determine the signer's authorization in the same manner. Most of the time, the data types are corresponding to data usage and processing to be executed on the reception end at the time of data reception. Regardless of such a correspondence, however, there has been no common rule for defining the signer's signature authorization. As a result, for every new data type, a logic for defining which signer has an authorization for signing the new data type has to be implemented in every data processor.

### SUMMARY OF THE INVENTION

Therefore, a first object of the present invention is to provide data processors accessible to peripheral equipment safely by allowing only privileged programs to access the peripheral equipment.

A second object of the present invention is to provide data processors capable of reducing the load of applications even if data region is segmented into protected and unprotected data regions, and detecting whether data included in the unprotected data region has been tampered.

A third object of the present invention is to provide data processors capable of determining whether a signer is authorized for signing the received data in the same manner regardless of data type.

The present invention has the following features to attain the objects above.

A first aspect of the present invention is directed to a data processor which is supplied with command data specifying a data component to be used for controlling itself, and operates based on the command data, the data processor comprising: a transmission/reception section for transmitting/receiving data to/from a server connected over a network; a validity determination section for determining whether the command data is valid; a command data processing section for retrieving, when the command data is determined as valid by the validity determination section, the data component specified by the command data from the server using the transmission/reception section; and a data component processing section for controlling the data processor based on the data component retrieved by the command data processing section. As such, according to the first aspect, data for controlling the data processor is retrieved based on the command data which is determined as valid. Therefore, the device control can be securely done.

In this case, the data component processing section may perform screen display based on the data component retrieved by the command data processing section, or may output the data component retrieved by the command data processing section to outside of the data processor. In this manner, screen display and data output can be securely done. Further, the data component used for controlling the data processor by the data component processing section may be limited to be the data component retrieved by the command data processing section. As such, by allowing the data used for controlling the data processor to be updated only in a fixed procedure, the data processor can be controlled in a safe manner.

Also, the command data may be encrypted, and the validity determination section may determine whether the command data is valid after decrypting it. Or, the command data processing section may determine whether the data component retrieved from the server is valid, and when determined valid, supply data component to the data component processing section. In such a manner, the data processor can be controlled in a safer manner.

Preferably, the command data processing section may include a language processing section for interpreting a JAVA language, and a JAVA applet to be processed by the language processing section. More preferably, the transmission/reception section may receive, in accordance with a user's instruction, the JAVA applet included in the command data processing section. In such a structure, by processing the command data following the JAVA applet (especially the one retrieved through communications), the contents of the command data can be changed flexibly. Further, the transmission/reception may receive, in accordance with a user's instruction, the command data for supply to the validity determination section. If so, the data processor has no more need to store therein the command data, and may retrieve it through communications for processing.

A second aspect of the present invention is directed to a data processor which is supplied with command data including a data component used for controlling itself, and operates based on the command data, the data processor comprising: a transmission/reception section for transmitting/receiving data to/from a server connected over a network; a validity determination section for determining whether the command data is valid; a command data processing section for retrieving, when the command data is determined as valid by the validity determination section, the data component included in the command data; and a data component processing section for controlling the data processor based on the data component retrieved by the command data processing section. As such, according to the second aspect, the data for controlling the data processor is retrieved based on the command data which is determined as valid. Therefore, the device control can be securely done.

In such a case, the data component processing section may perform screen display based on the data component retrieved by the command data processing section, or may output the data component retrieved by the command data processing section to outside of the data processor. Thereby, screen display and data output can be securely done. Moreover, the data component used for controlling the date processor by the data component processing section may be limited to be the data component retrieved by the command data processing section. As such, by allowing the data used for controlling the data processor to be updated only in a fixed procedure, the data processor can be controlled in a safe manner.

Also, the command data may be encrypted, and the validity determination section may determine whether the command data is valid after decrypting it. If so, the data processor can be controlled in a safer manner.

Preferably, the command data processing section may include a language processing section for interpreting a JAVA language, and a JAVA applet to be processed by the language processing section. More preferably, the transmission/reception section may receive, in accordance with a user's instruction, the JAVA applet included in the command data processing section. In such a structure, by processing the command data following the JAVA applet (especially the one retrieved through communications), the contents of the command data can be changed flexibly. Alternatively, the transmission/reception section may receive, in accordance with a user's instruction, the command data for supply to the validity determination section. If so, the data processor has no more need to store therein the command data, and may retrieve it through communications for processing.

A third aspect of the present invention is directed to a data processing method in which command data specifying a data component to be used for controlling a data processor is supplied, and the command data is used as a basis for an operation, the method comprising: a transmission/reception step of transmitting/receiving data to/from a server connected over a network; a validity determination step of determining whether the command data is valid; a command data processing step of retrieving, when the command data is determined as valid in the validity determination step, the data component specified by the command data from the server by calling for the transmission/reception step; and a data component processing step of controlling the data processor based on the data component retrieved in the command data processing step. As such, according to the third aspect, data for controlling the data processor is retrieved based on the command data which is determined as valid. Therefore, the device control can be securely done.

A fourth aspect of the present invention is directed to a data processing method in which command data including a data component used for controlling a data processor is supplied, and the command data is used as a basis for an operation, the method comprising: a transmission/reception step of transmitting/receiving data to/from a server connected over a network; a validity determination step of determining whether the command data is valid; a command data processing step of retrieving, when the command data is determined as valid in the validity determination step, the data component included in the command data; and a data component processing step of controlling the data processor based on the data component retrieved in the command data processing step. As such, according to the fourth aspect, data for controlling the data processor is retrieved from the command data which is determined as valid. Therefore, the device control can be securely done.

A fifth aspect of the present invention is directed to a data processor for receiving and processing data to which information for tampering detection is added, the data processor comprising: a reception section for receiving data which includes an authentication information region for including the tampering detection information, a protected data region for including data to be subjected to tampering detection, and an unprotected data region for including data not to be subjected to tampering detection, wherein the protected data region includes an unprotection list which lists, by type, the data included in the unprotected data region; a protected data authentication section for detecting, for the data received by the reception section, whether the data included in the protected data region has been tampered by using the tampering detection information included in the authentication information region; and an unprotected data authentication section for authenticating, for the data received by the reception section, whether the data included in the unprotected data region is valid based on the unprotection list which has been confirmed as not having been tampered by the protected data authentication section. In this case, the data received by the reception section may be hypertext, and the unprotection list may list, by type, a tag included in the unprotected data region.

As described above, in the fifth aspect, compared with the case where the data is subjected to data signature in its entirety, the data amount to be used for signature authentication can be reduced, successfully improving the efficiency for signature authentication. Moreover, the data (or tag) included in the unprotected data region can be increased in reliability. Further, the application has no need to know whether the data (or tag) has been included in which of the protected data region or the unprotected data region for processing the received data. As a result, the application can be reduced in processing amount, thereby rendering the processing speed increased.

A sixth aspect of the present invention is directed to a data processor structured by a transmitting data processor and a receiving data processor, wherein the transmitting data processor transfers, to the receiving data processor, data to which information for tampering detection is added, wherein the transmitting data processor comprises: an unprotection list generation section for generating an unprotection list which lists, by type, data not to be subjected to tampering detection; a data generation section for generating data to be transmitted by arranging data to be subjected to tampering detection in a protected data region together with the unprotection list, the data not to be subjected to tampering detection in an unprotected data region, and the tampering detection information derived based on the data in the protected data region in an authentication information region; and a transmission section for transmitting the data generated by the data generation section, and the receiving data processor comprises: a reception section for receiving the data transmitted from the transmitting data processor; a protected data authentication section for detecting, for the data received by the reception section, whether the data in the protected data region has been tampered by using the tampering detection information in the authentication information region; and an unprotected data authentication section for authenticating, for the data received by the reception section, whether the data included in the unprotected data region is valid based on the unprotection list which has been confirmed as not having been tampered by the protected data authentication section. If this is the case, the data generated by the data generation section may be hypertext, and the unprotection list may list, by type, a tag included in the unprotected data region.

As such, in the sixth aspect, in addition to the effects of the fifth aspect, data (or tag) can be appropriately changed in state, protected or unprotected, without changing applications in data processors on the reception end. Thus, data handling can be freely changed.

A seventh aspect of the present invention is directed to a data processing method for receiving and processing data to which information for tampering detection is added, the method comprising: a reception step of receiving data which includes an authentication information region for including the tampering detection information, a protected data region for including data to be subjected to tampering detection, and an unprotected data region for including data not to be subjected to tampering detection, wherein the protected data region includes an unprotection list which lists, by type, the data included in the unprotected data region; a protected data authentication step of detecting, for the data received in the reception step, whether the data included in the protected data region has been tampered by using the tampering detection information included in the authentication information region; and an unprotected data authentication step of authenticating, for the data received in the reception step, whether the data included in the unprotected data region is valid based on the unprotection list which has been confirmed as not having been tampered in the protected data authentication step.

As described above, in the seventh aspect, compared with the case where the data is subjected to data signature in its entirety, the data amount to be used for signature authentication can be reduced, successfully improving the efficiency for signature authentication. Moreover, the data included in the unprotected data region can be increased in reliability. Further, the application has no need to know whether the data has been included in which of the protected data region or the unprotected data region for processing the received data. As a result, the application can be reduced in processing amount, thereby rendering the processing speed increased.

An eighth aspect of the present invention is directed to a data processing method for transferring data to which information for tampering detection is added from a transmitting data processor to a receiving data processor, wherein the transmitting data processor performs: an unprotection list generation step of generating an unprotection list which lists, by type, data not to be subjected to tampering detection; a data generation step of generating data to be transmitted by arranging data to be subjected to tampering detection in a protected data region together with the unprotection list, the data not to be subjected to tampering detection in an unprotected data region, and the tampering detection information derived based on the data in the protected data region in an authentication information region; and a transmission step of transmitting the data generated in the data generation step, and the receiving data processor performs: a reception step of receiving the data transmitted from the transmitting data processor; a protected data authentication step of detecting, for the data received in the reception step, whether the data in the protected data region has been tampered by using the tampering detection information in the authentication information region; and an unprotected data authentication step of authenticating, for the data received in the reception step, whether the data included in the unprotected data region is valid based on the unprotection list which has been confirmed as not having been tampered in the protected data authentication step.

As such, in the eighth aspect, in addition to the effects of the seventh aspect, data (or tag) can be appropriately changed in state, protected or unprotected, without changing applications in data processors on the reception end. Thus, data handling can be freely changed.

A ninth aspect of the present invention is directed to a data processor for receiving and processing data with a digital signature, comprising: a reception section for receiving the data with the digital signature from a server connected over a network; a signer certificate acquiring section for acquiring a signer certificate indicating, by type, what data is signable by a signer of the data received by the reception section; and a signature authentication section for determining, when the signer certificate acquired by the signer certificate acquiring section indicates, by type, the data received by the reception section, that a signature applied to the data as valid. As such, according to the ninth aspect, it can be determined whether the signer has an authorization for signing the received data using the same algorithm for any arbitrary data type.

In such a case, the signer certificate may include, in a list, by type, a plurality of the signable data. With such a structure, only a single signer certificate can be used to represent that the signer has an authorization for signing the data varying in type. Further, the signer certificate can include a wildcard as a type of the signable data, and when the signer certificate acquired by the signer certificate acquiring section includes the wildcard as the type of the signable data, the signature authentication section determines that the signature applied to any data received in the reception section as valid. In this manner, the signer certificate has no need to list every data type to indicate that the signer has the authorization for signing all of the data type.

Moreover, the signature authentication section may acquire a type of the data based on a characteristic part of a URI (Uniform Resource Identifier) of the data received by the reception section, or may acquire the type of the data based on a header part of the data received by the reception section. In this manner, by comparing, as character strings, the characteristic part of the URI of the data (or data type identification information included in the header part at the time of data reception) with the signable data type included in the signer certificate, it will be determined whether or not the signer has an authorization for signing the received data.

Moreover, the signer certificate acquiring section may receive the signer certificate by using the reception section. If so, there is no need to possess the signer certificate beforehand, and by receiving the signer certificate, determination can be made whether the signer has an authorization for the received data.

A tenth aspect of the present invention is directed to a data processing method for receiving and processing data with a digital signature, comprising: a reception step of receiving the data with the digital signature from a server connected over a network; a signer certificate acquiring step of acquiring a signer certificate indicating, by type, what data is signable by a signer of the data received in the reception step; and a signature authentication step of determining, when the signer certificate acquired in the signer certificate acquiring step indicates, by type, the data received in the reception step, that a signature applied to the data as valid. As such, according to the tenth aspect, by applying the same algorithm to any arbitrary data type, it can be determined whether the signer has an authorization for signing the received data.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram showing the structure of a communications system including a data processor according to any one of first to fifth embodiments of the present invention;
FIG. 2 is a block diagram showing the hardware structure shared among the data processors of the first to third, and fifth embodiments;
FIG. 3 is a block diagram showing the structure of the data processor of the first embodiment;
FIG. 4 is a flowchart showing the operation of the data processor of the first embodiment;
FIG. 5 shows exemplary command data in the data processor of the first embodiment;
FIG. 6 shows exemplary terminal data in the data processor of the first embodiment;
FIG. 7 is a flowchart showing a command data analyzing process in the data processor of the first embodiment;
FIG. 8 shows an exemplary result of analyzing the command data in the data processor of the first embodiment;
FIG. 9 is a flowchart showing a command data validity determining process in the data processor of the first embodiment;
FIG. 10 is a flowchart showing an operation controlling process in the data processor of the first embodiment;
FIG. 11 is an illustration showing how a display screen changes as a result of updating the terminal data in the data processor of the first embodiment;
FIG. 12 is a block diagram showing the structure of the data processor of the second embodiment of the present invention;
FIG. 13 is a flowchart showing the operation of the data processor of the second embodiment;
FIG. 14 shows exemplary command data in the data processor of the second embodiment;
FIG. 15 shows an exemplary result of analyzing the command data in the data processor of the second embodiment;
FIG. 16 is a flowchart showing an operation controlling process in the data processor of the second embodiment;
FIG. 17 is a block diagram showing the structure of the data processor of the third embodiment of the present invention;
FIG. 18 is a diagram showing the structure of data to be processed by the data processor of the third embodiment;
FIG. 19 is a diagram showing the structure of XML data to be processed by the data processor of the third embodiment;
FIG. 20 is a flowchart showing the operation of the data processor of the third embodiment;
FIG. 21 is a block diagram showing the structure of the data processor of the fourth embodiment of the present invention;
FIG. 22 is a diagram showing the structure of XML data to be processed by the data processor of the fourth embodiment;
FIG. 23 is a block diagram showing the structure of the data processor of the fifth embodiment of the present invention;
FIG. 24 shows an exemplary content to be processed by the data processor of the fifth embodiment; and
FIG. 25 shows an exemplary signer certificate to be referred to by the data processor of the fifth embodiment.

### DESCRIPTION OF THE PREFERRED EMBODIMENTS

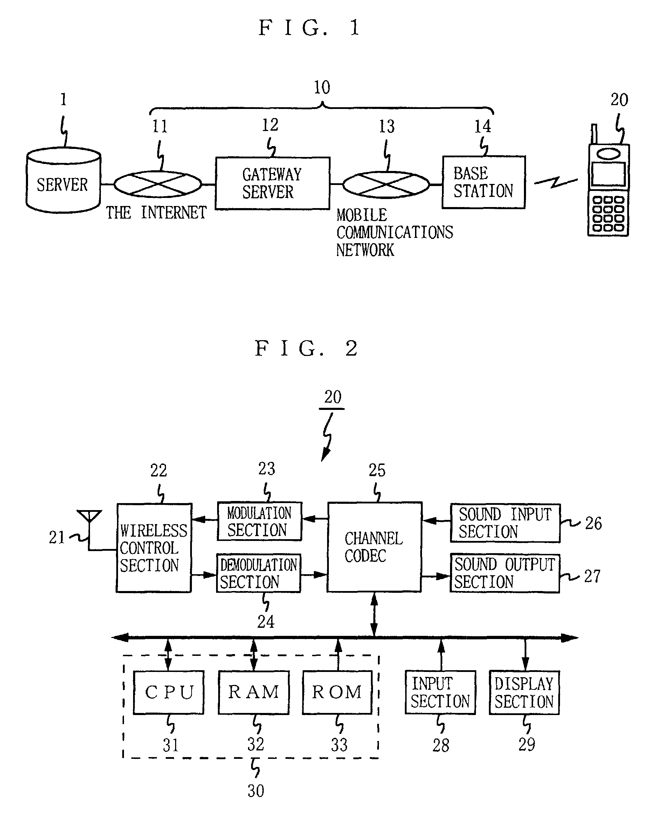

FIG. 1 is a diagram showing the structure of a communications system including a data processor according to any one of first to fifth embodiments of the present invention. In FIG. 1, a server 1 and a mobile unit 20 are both connected to a communications network 10, which includes the Internet 11, a gateway server 12, a mobile communications network 13, and a base station 14. The server 1 carries information written in languages for HyperText such as HTML (HyperText Markup Language) and XML (extended Markup Language) and image information, and is connected to the Internet 11. The mobile unit 20 performs digital wireless communications using CDMA (Code Division Multiple Access) between the base station 14 connected to the mobile communications network 13, for example. The gateway server 12 connects the Internet 11 and the mobile communications network 13 to each other. The mobile unit 20 makes an information request to the server 1 in response to the user's operation, and accordingly receives the requested information from the server 1. The mobile unit 20 supplies thus received information to any predetermined application program, or displays the information on its screen. Here, as is not shown in FIG. 1, in the typical communications system, the communications network 1 is connected with a plurality of servers 1 and a plurality of mobile units 20.

FIG. 2 is a block diagram showing the hardware structure of the mobile unit 20 of FIG. 1. As shown in FIG. 2, the mobile unit 20 includes an antenna 21, a wireless control section 22, a modulation section 23, a demodulation section 24, a channel codec 25, a sound input section 26, a sound output section 27, an input section 28, a display section 29, and an application execution section 30. The wireless control section 22 has two functions of: superimposing modulated data coming from the modulation section 23 onto a wireless carrier for transmission from the antenna 21; and receiving a signal in a predetermined frequency band from a high-frequency signal induced by the antenna 21. The modulation section 23 modulates data outputted from the channel codec 25 in a given manner for output to the wireless control section 22. The demodulation section 24 demodulates the signal received by the wireless control section 22 in a given manner, and outputs the resultant signal to the channel codec 25. In the channel codec 25, the signal outputted from the demodulation section 24, and signals coming from the sound input section 26 and the application execution section 30 are coded/decoded in a given manner. The data outputted from the demodulation section 24 is forwarded to either the sound output section 27 or the application execution section 30. The sound signal outputted from the sound input section 26 is forwarded to either the modulation section 23 or the application execution section 30. The data from the application execution section 30 is forwarded to either the modulation section 23 or the sound output section 27.

The sound input section 26 is composed of a microphone, for example, and outputs an incoming sound signal to the channel codec 25. The sound output section 27 is composed of a speaker, for example, and outputs data coming from the channel codec 25 by sound. The input section 28 is composed of a keyboard or buttons, for example, and outputs to the channel codec 25 operation data inputted through a display screen or dial numbers through push buttons. The display section 29 is composed of a display device, for example, and outputs data coming from the application execution section 30 for screen display, or in a vibrating alert mode, for example.

The application execution section 30 includes a CPU 31, RAM 32, and ROM 33. The RAM 32 is a working memory for the CPU 31. The ROM 33 stores programs to be executed by the CPU 31, data to be referred to by the CPU 31, or the like. The CPU 31 executes the programs stored in the RAM 32 or the ROM 33 while using the RAM 32 as a working memory. In this manner, the application execution section 30 performs various types of processes, e.g., connection control to the communications network 10, generation of transmitting data, display and storage of received data, and others.

In the below, the data processors according to the first to fifth embodiments are each described in detail. Specifically, the data processors of the first to third, and fifth embodiments correspond to the mobile unit 20 in FIG. 1, and the data processor of the fourth embodiment corresponds to the server 1 in FIG. 1. In those data processors of the first to third, and fifth embodiments, the CPU 31 executes programs stored in the RAM 32 or the ROM 33 according to the respective embodiments.

### (First Embodiment)

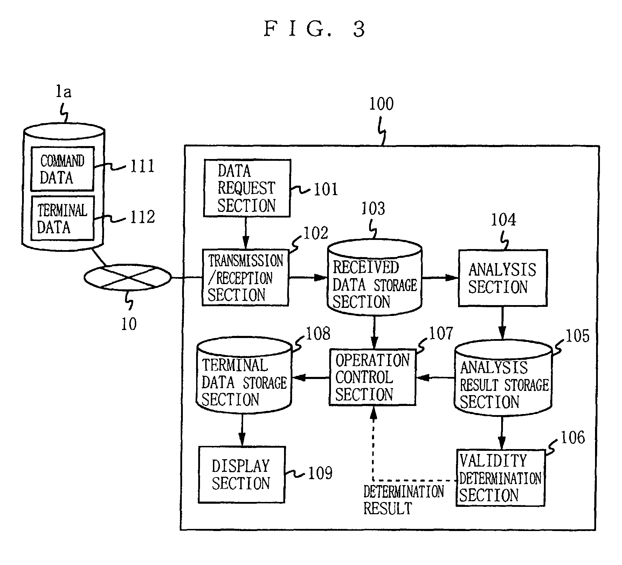

FIG. 3 is a block diagram showing the structure of a data processor 100 according to the first embodiment of the present invention. As shown in FIG. 3, to the communications network 10, a server 1a and the data processor 100 are connected. The server 1a stores data written in HTML, XML, or the like, and image data, and forwards such data in response to any data request coming from the data processor 100. To retrieve any data from the server 1a, the data processor 100 first receives from the server 1a command data 111 including any command for the data processor 100. Then, in accordance with the command data 111, the data processor 100 retrieves data which is originally intended to retrieve from the server 1a. The data eventually retrieved from the server 1a is referred to as terminal data 112, and used to control the data processor 100.

The command data 111 includes, as address information for specifying the terminal data 112, a URL (Uniform Resource Locator) of the corresponding terminal data 112. Here, the terminal data 112 is presumably image data to be displayed on the screen, for example, icon image data. In response to the user's operation, the data processor 100 retrieves the terminal data 112 for screen display. Assuming here that the terminal data 112 is retrieved and updated always in the above procedure , i.e., command data is received first, and terminal data follows in accordance with the received command data. In this sense, the data processor 100 may be referred to as an information terminal device.

As shown in FIG. 3, the data processor 100 includes a data request section 101, a transmission/reception section 102, a received data storage section 103, an analysis section 104, an analysis result storage section 105, a validity determination section 106, an operation control section 107, a terminal data storage section 108, and a display section 109. In response to the user's request, the data request section 101 specifies which command data 111 is to be received. The transmission/reception section 102 transmits/receives data to/from the server 1a connected to the communications network 10. The received data storage section 103 stores the data received by the transmission/reception section 102.

The analysis section 104 analyzes the command data stored in the received data storage section 103. The analysis result storage section 105 stores the result of analyzing the command data by the analysis section 104. Based on the analysis result thus stored in the analysis result storage section 105, the validity determination section 106 determines whether the received command data is valid or not. When determined as valid, the analysis result is used as the basis for the operation of the operation control section 107. In a case where the URL included in the command data 111 is the one for the terminal data 112, for example, the operation control section 107 so controls the transmission/reception section 102 as to retrieve the terminal data 112 from the server 1a.

Thus retrieved terminal data 112 is stored in the terminal data storage section 108. Under conditions which will be described later, the operation control section 107 writes the data stored in the received data storage section 103 to the terminal data storage section 108. The display section 109 displays on its screen the terminal data stored in the terminal data storage section 108. Here, data writing to the terminal data storage section 108 is allowed only for the operation control section 107.

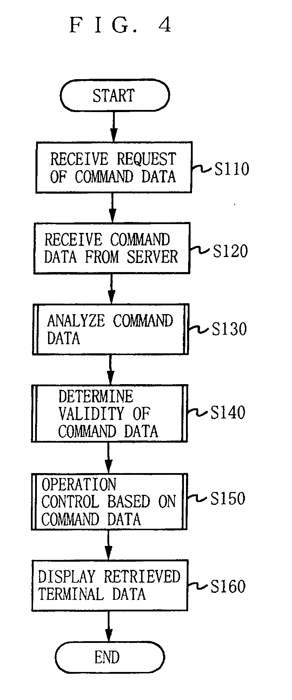

FIG. 4 is a flowchart showing a terminal data updating process executed by the data processor 100. First, in a data requesting process (step S110), the data request section 101 receives a data request of the command data 111 from the user. To make such a data request, the user selects any anchor on the screen displayed by a Web browser.

Then, in a command data receiving process (step S120), the transmission/reception section 102 receives the command data 111 specified in step S110 from the server 1a. More specifically, the transmission/reception section 102 first forwards a request of the command data 111 to the server 1a, and correspondingly, receives the command data 111 from the server 1a. Thus received command data is stored in the received data storage section 103.

Next, in a command data analyzing process (step S130), the analysis section 104 analyzes the command data stored in the received data storage section 103. The result of analyzing the command data is stored in the analysis result storage section 105.

Then, in a command data validity determining process (step S140), based on the analysis result stored in the analysis result storage section 105, the validity determination section 106 determines whether or not the received command data is valid. If determined as valid, the procedure goes to step S150, otherwise this is the end of the terminal data updating process without the procedure going to step S150 and onward.

Next, in an operation controlling process (step S150), the operation control section 107 operates in accordance with the received command data. If the command data includes the URL of the terminal data 112, the operation control section 107 so controls the transmission/reception section 102 as to retrieve the terminal data 112 from the server 1a. Here, if the command data includes several of the URLs of the terminal data 112, the operation control section 107 retrieves the terminal data 112 for the corresponding number of times. The retrieved terminal data is then stored in the received data storage section 103.

Then, in a displaying process (step S160), the operation control section 107 writes the terminal data retrieved in step S150 to the terminal data storage section 108. The display section 109 then displays on its screen the terminal data stored in the terminal data storage section 108. By sequentially executing a sequence of processes of FIG. 4, the terminal data 112 specified by the command data 111 is retrieved from the server 1a, and displayed on the screen of the data processor 100.

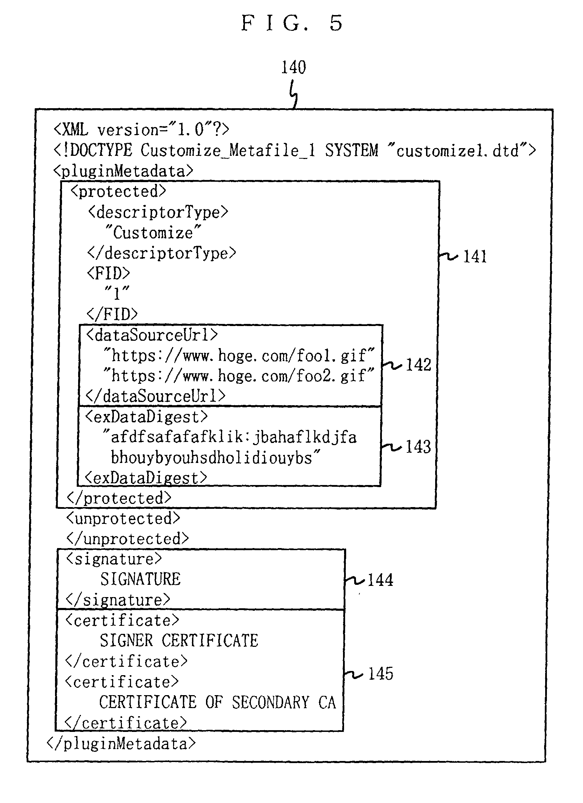

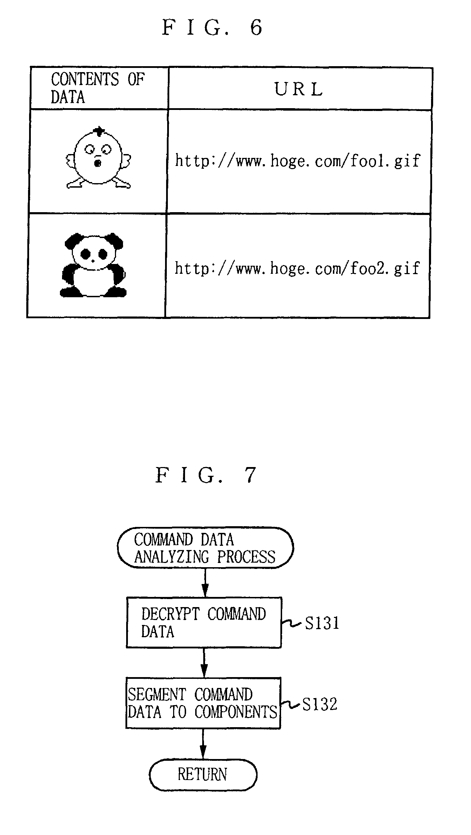

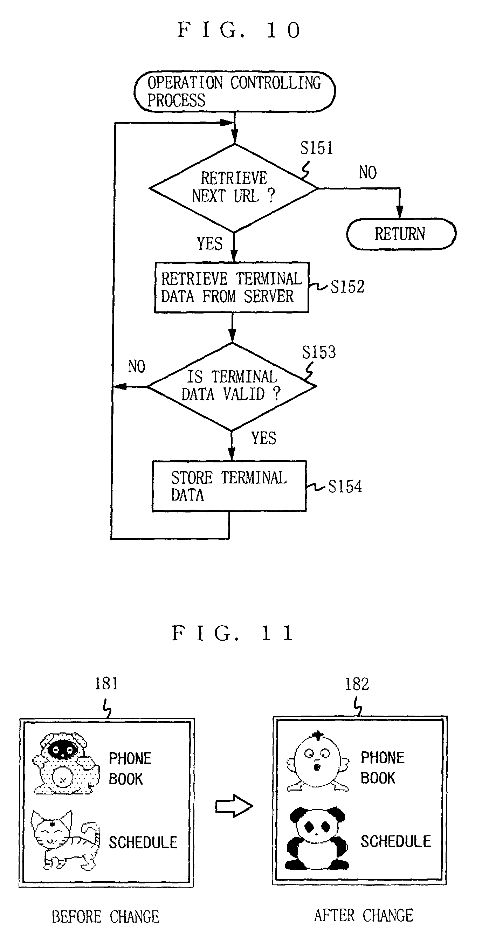

FIGS. 5 and 6 show examples of the command data 111 and the terminal data 112, respectively. FIG. 5 shows exemplary command data 140, which is a specific version of the command data 111 in XML. In the command data 111, any part between <character string X> and </character string X> is referred to as an "X tag". In the command data 140, a protected tag 141, a dataSourceUrl tag 142, a signature tag 144, and a certificate tag 145 are used in the command data validity determining process (step S140). An exDataDigest tag 143 is used in a terminal data validity determining process (step S153 of FIG. 10, which will be described below). The protected tag 141 includes commands for the data processor 100. In the example of FIG. 5, commanded is to "Customize" the display screen by accessing two URLs in the dataSourceUrl tag 142 and retrieving the corresponding two terminal data.

FIG. 6 shows an example of the terminal data 112. In FIG. 6, rows of the table each correspond to one terminal data. The left column indicates the contents of the corresponding terminal data, and the right column indicates the URL of the corresponding terminal data. Exemplarily shown in FIG. 6 as the terminal data are image data of a fowl, and that of a panda. The dataSourceUrl tag 142 in the command data 140 of FIG. 5 carries URLs for each of such terminal data.

Referring to FIG. 7 described in detail next is the command data analyzing process (step S130). Assuming here that the command data 111 in the server 1a has been encrypted using DES (Data Encryption Standard) algorithm. In such a case, the command data received in the command data receiving process (step S120) remains encrypted. Thus, in a decrypting process (step S131), the analysis section 104 decrypts the command data 111. Then, in the command data analyzing process (step S132), the analysis section 104 segments the decrypted command data into components. The analysis result is stored in the analysis result storage section 105. Here, if the command data 111 has not been encrypted, the procedure jumps to the command data analyzing process (step S132) without going through the decrypting process (step S131).

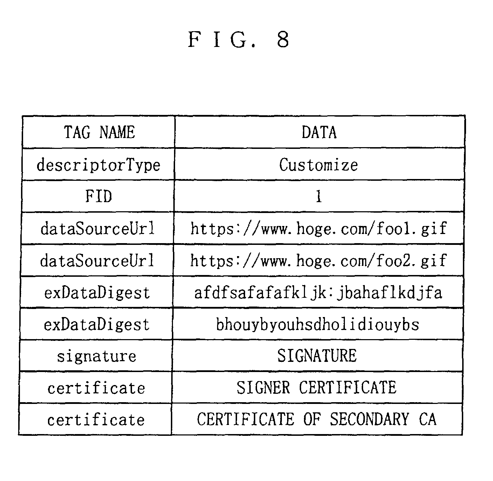

The analysis result storage section 105 stores the result of analyzing the command data 111 while pairing tag names with data. FIG. 8 shows the result of analyzing the command data 140. In this example, "descriptorType" which is information identifying what the command data is commanding is paired with "Customize". "FID" which is information indicating the version of the command data is paired with "1". "dataSourceUrl" which defines, by URL, what terminal data is to be retrieved by the operation control section 107 now having received the command data is paired with "https://www.hoge.com/fool.gif" and another "dataSourceUrl" with "https://www.hoge.com/foo2.gif". "exDataDigest" which is information derived by hashing the URLs of the terminal data under MD5 (Message Digest 5) algorithm is paired with "afdfsafafafkljk:jbahaflkdjfa", and another "exDataDigest" with "bhouybyouhsdholidiouybs". "signature" is paired with the signature found in the signature tag 144. "certificate" is paired with the signer certificate found in the certificate tag 145, and another "certificate" with the certificate of secondary CA (Certificate Agency). Here, depending on the contents of the command data 111, the analysis result may include no certificate of secondary CA, or may include certificates of tertiary CA and quaternary CA together with the certificate of secondary CA.

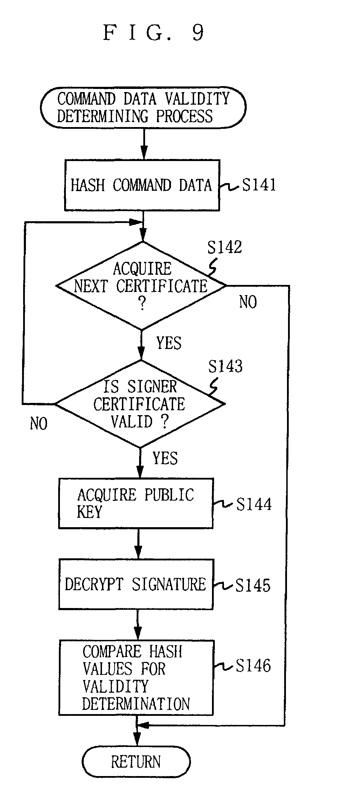

Referring to FIG. 9, the command data validity determining process (step S140) is described in detail. In the below, exemplarily, the command data 140 is the one determined whether valid or not. First, in a hashing process (step S141), the validity determination section 106 hashes, out of the command data 140, the data between <protected> and </protected> using the MD5 algorithm.

Next, in a certificate acquiring process (step S142), the validity determination section 106 extracts, one by one, the certificates stored under the "certificate" from the analysis result storage section 105. In this example, the validity determination section 106 extracts the signer certificate first, and then the certificate of secondary CA, and if including, the certificate of tertiary CA, and then the certificate of quaternary CA. Here, presumably, the certificate is the one adopted in digital signature using public key cryptosystem, which is popular in the Internet.

Next, in a certificate determining process (step S143), the validity determination section 106 uses the certificates so far acquired to determine whether the signer certificate is valid or not. Specifically, the validity determination section 106 determines whether the signer certificate is valid or not firstly by using only the signer certificate, secondly by using the certificate of secondary CA together with the signer certificate, and thirdly by using, if including, the certificate of tertiary CA together with the signer certificate and the certificate of secondary CA. If the signer certificate cannot be proved as valid (NO in step S143), the procedure goes to step S142. If this is the case, the data processor 100 acquires any new certificate to try to determine the validity of the signer certificate again.

If the signer certificate is proved as valid (YES in step S143), the procedure goes to step S144 and onward. In a public key acquiring process (step S144), the validity determination section 106 acquires a public key from the signer certificate. In a signature decrypting process (step S145), the validity determination section 106 then uses the public key acquired in step S144 to decrypt the signature in the signature tag 144. In this manner, the signature applied to the command data can be derived. Next, in a hash value comparing process (step S146), the validity determination section 106 compares the hash value calculated in step S141 with the signature derived in step S145. If those are the same, the validity determination section 106 determines that the command data 140 is valid. This is the end of the command data validity determining process.

Here, if no certificate is newly acquired in the certificate acquiring process (NO in step S142) , or if those two values are not the same in the hash value comparing process (step S146), that is the end of the terminal data updating process.

Referring to FIG. 10, the operation controlling process (step S150) is described in detail. First in a URL retrieving process (step S151), the operation control section 107 sequentially retrieves, one by one, the URLs of the terminal data 112 stored in the analysis result storage section 105. Then, in a terminal data retrieving process (step S152), the operation control section 107 controls the transmission/reception section 102, accesses the URLs acquired in step S151, and resultantly retrieves the terminal data 112 from the server 1a.

Next, in the terminal data validity determining process (step S153), the operation control section 107 determines whether thus retrieved terminal data is valid or not. Stored in the analysis result storage section 105 are, as the analysis result of the command data 111, values derived by hashing the terminal data 112 using the MD5. Accordingly, the operation control section 107 hashes the retrieved terminal data using also the MD5 algorithm, and when the resultant hash value is the same as the hash value already stored in the analysis result storage section 105, the retrieved terminal data is determined as valid. If the command data 111 carries no such a result of hashing the terminal data 112, the procedure may skip step S153.

As such, after the retrieved terminal data is determined as valid in the terminal data validity determining process (YES in step S153), the procedure goes to the terminal data storing process (step S154). In this process, the operation control section 107 writes the retrieved terminal data to the terminal data storage section 108. Then, the procedure goes to step S152 to process the next terminal data. If every URL included in the command data is through with a sequence of processes from steps S151 to S154 (NO in step S151), this is the end of the operation controlling process.

FIG. 11 shows how the display screen changes as a result of updating the terminal data. The display section 109 performs screen display based on the terminal data stored in the terminal data storage section 108. Assuming here that, prior to updating the terminal data, displayed is a screen 181. And the user changes two icons thereon through his/her operation. Responding to such user's operation, the data processor 100 receives the command data 140, and in accordance therewith, receives two types of image data as shown in FIG. 6. By the data processor 100 writing thus received image data to the terminal data storage section 108, a screen 182 appears.

As described in the above, according to the data processor of the present embodiment, screen update can be securely done by allowing the terminal data to be updated only in a fixed procedure.

### (Second Embodiment)

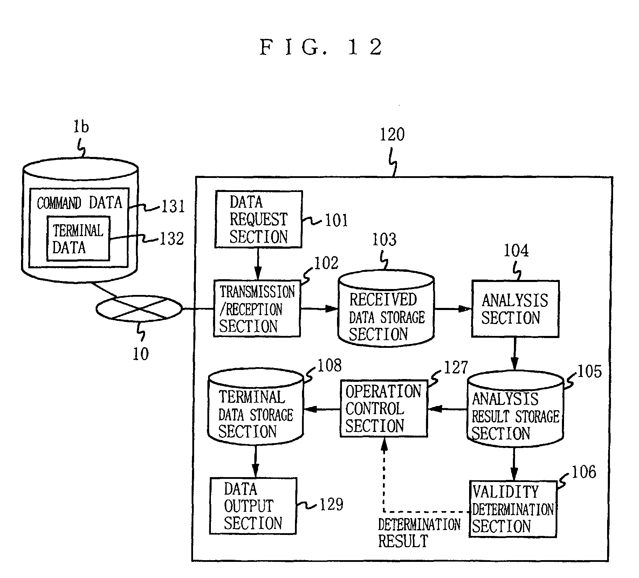

FIG. 12 is a block diagram showing the structure of a data processor 120 according to the second embodiment of the present invention. In the data processor 120 of FIG. 12, a data output section 129 is provided as an alternative to the display section 109 in the data processor 100 of the first embodiment. Further, the operation control section in this embodiment operates differently from that in the first embodiment, and thus is under the different reference numeral of 127. Herein any constituent identical to that in the first embodiment is provided with the same reference numeral, and not described again.

As shown in FIG. 12, to the communications network 10, a server 1b and the data processor 120 are connected. Note that, the server 1a of the first embodiment stores the command data 111 and the terminal data 112 separately, but stored in the server 1b of the present embodiment is command data 131 which is initially including one or more terminal data 132.

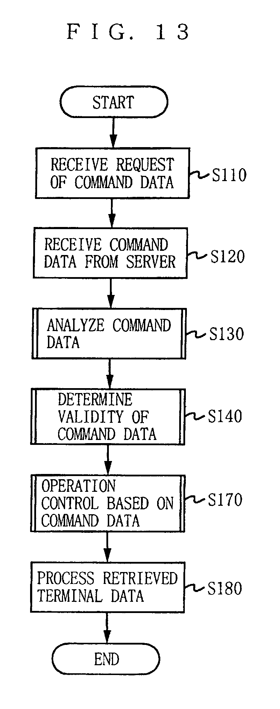

FIG. 13 is a flowchart showing the terminal data updating process executed by the data processor 120. Here, steps S110 to S140 of FIG. 13 are the same as those in the first embodiment, and thus provided with the same step numbers, and no further description is given here.

After the command data validity determining process (step S140), the procedure goes to an operation controlling process (step S170), which is different from the operation controlling process in the first embodiment. In this process, the operation control section 127 operates in accordance with the received command data. Herein, since the command data comes together with terminal data, receiving the command data means retrieving also the terminal data.

Then, in a terminal data outputting process (step S180), the operation control section 127 writes the terminal data retrieved in step S170 to the terminal data storage section 108. The data output section 129 reads the terminal data thus stored in the terminal data storage section 108, and outputs it to outside of the data processor 120. By sequentially going through the processes of FIG. 13, the command data 131 is forwarded from the server 1b, and the terminal data 132 included in the command data 131 is outputted to the outside of the data processor 120.

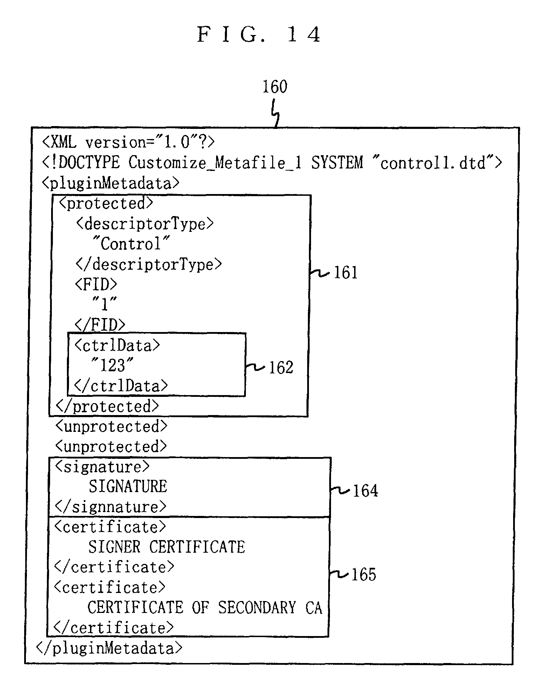

FIG. 14 shows examples of the command data 131 and the terminal data 132. Command data 160 of FIG. 14 is a specific version of the command data 131 in XML. In the command data 131, any part between <character string X> and </character string X> is referred to as an "X tag". Similarly to the first embodiment, in the command data 160, a protected tag 161, a signature tag 164, and a certificate tag 165 are used in the command data validity determining process (step S140). The protected tag 161 includes any command for the data processor 120. In the example of FIG. 14, commanded is to "Control" the data output section 129 using the data in the cntlData tag 162 ("123"). In this sense, the data "123" corresponds to the terminal data 132. Presumably, the command data 131 in the server 1b has been, as in the first embodiment, encrypted using the DES algorithm, for example.

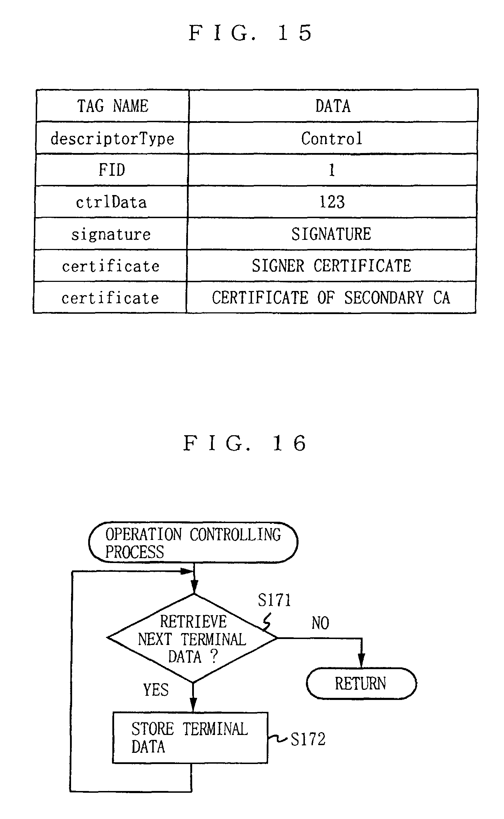

FIG. 15 shows the analysis result of the command data 160. FIG. 15 is different from FIG. 8 in the following respect: "descriptorType" for indicating what the command data is commanding is paired with "Control", and "ctrlData" is newly included for indicating what terminal data is to be retrieved by the operation control section 127 having received the command data, and paired therewith is "123".

Referring to FIG. 16, the operation controlling process (step S170) is now described in detail. First, in a terminal data retrieving process (step S171), the operation control section 127 sequentially retrieves, one by one, the terminal data stored in the analysis result storage section 105. Then, in a terminal data storing process (step S172), the operation control section 127 writes the retrieved terminal data to the terminal data storage section 108. Thereafter, the procedure goes to step S171 to process the next terminal data. If every terminal data has been processed for the current command data (NO in step S171) , this is the end of the operation controlling process.

As such, according to the data processor of the present embodiment, the data processor can be securely controlled by updating the terminal data only in a fixed procedure.

In the first and second embodiments, the operation control sections 107 and 127 are configured by the CPU 31 executing the programs stored in the RAM 32 or the ROM 33. Specifically, the operation control sections 107 and 127 may be configured by the CPU 31 executing a JAVA applet stored in the RAM 32 as a JAVA virtual machine. If this is the case, the JAVA applet may be dynamically downloaded to the data processors 100 and 120 over the communications network 10 responding to the user's command. Moreover, in the above, the data processors 100 and 120 store the terminal data 112 retrieved based on the command data 111 (or the terminal data 132 retrieved from the command data 131) into the terminal data storage section 108. This is not restrictive, and such terminal data may be directly outputted to any data output section provided in peripheral equipment, IrDA (Infrared Data Association) communications interface section, or the like.

Further, the data processors 100 and 120 may retrieve the command data 111 and 131 by any other means except communications. For example, recording media may be used for the purpose. In the command data 111 and 131, the tags are not restricted in format, and may be in a format of "tag name: value" or others. The encryption system applied to the command data 111 and 131 is arbitrary, not limited to the DES algorithm. In the command data validity determining process (step S140), the validity of the signer certificate may be determined by any other means except for public key cryptosystem. The hash algorithm in steps S141 and S153 may be any other algorithm except for the MD5. In step S141, the command data 111 and 131 may not necessarily be entirely hashed, and the region for the purpose may be determined as required. Since the command data is hashed for the purpose of comparison between the resultant hash value and the result of decrypting the signature, the process in step S141 may be carried out at any arbitrary timing before step S146. Further, in step S144, the public key is acquired from the certificate of the signer included in the command data. This is not restrictive, and the public key may be acquired in other manners as long as the public key of the signer can be correctly acquired. As an example, in step S144, the public key may be acquired from the signer's certificate which has been previously stored in the data processors. The terminal data 112 and 132 are not restricted to be image data, and may be music data, control data, or the like.

In the first embodiment, the command data 111 includes the URL(s) of the terminal data 112. Alternatively, the command data 111 may include identification information for uniquely specifying the terminal data 112, and the data processor 100 may use the identification information to derive the URL(s) of the terminal data. Also, the command data includes the hash value of the terminal data, and this hash value is used in step S153 to determine whether the command data is valid or not. This is not restrictive, and the command data may include a checksum or data size of the terminal data, and in step S153, it may be used to determine the validity of the command data. Alternatively, step S153 may be skipped. Furthermore, the command data 111 and the terminal data 112 may be stored in different servers.

### (Third Embodiment)

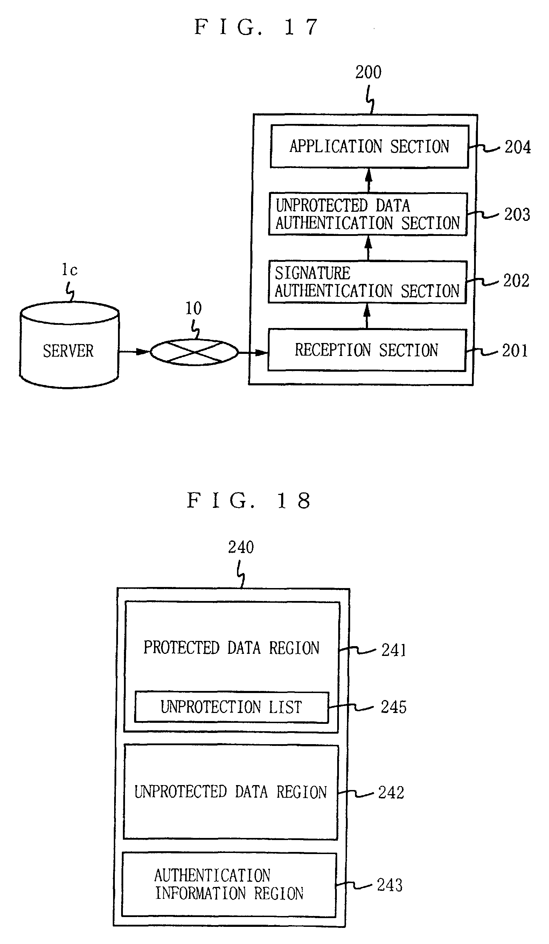

FIG. 17 is a block diagram showing the structure of a data processor 200 according to the third embodiment of the present invention. As shown in FIG. 17, to the communications network 10, a server 1c and the data processor 200 are connected. The server 1c stores data written in HTML or XML, for example, and image data, and forwards data in response to any request coming from the data processor 200. In the present embodiment, there is no limitation for the procedure of the data processor 200 to retrieve data from the server 1c. As an example, the data processor 200 may forward the data request to the server 1c responding to the user's operation.

As shown in FIG. 17, the data processor 200 includes a reception section 201, a signature authentication section 202, an unprotected data authentication section 203, and an application section 204. The reception section 201 receives data from the server 1c connected to the communications network 10. As to the received data, the signature authentication section 202 authenticates its digital signature. The unprotected data authentication section 203 checks the validity of any data determined as not to be protected by means of digital signature. The application section 204 uses the received data for various operations.

FIG. 18 is a diagram showing the structure of data to be processed by the data processor 200. Data 240 of FIG. 18 includes a protected data region 241, an unprotected data region 242, and an authentication information region 243. The protected data region 241 carries data to be protected by digital signature. The unprotected data region 242 carries data not to be protected by digital signature. The authentication information region 243 includes a signature and a public key for digital signature. The protected data region 241 carries also an unprotection list 245, which shows a listing of data type in the unprotected data region 242.

Referring to FIGS. 17 and 18, the operation of the data processor 200 is now described. The reception section 201 receives data from the server 1c wirelessly or through cables. In the below, the data 240 of FIG. 18 is assumed to be received. The reception section 201 outputs the received data 240 to the signature authentication section 202.

The signature authentication section 202 checks, based on authentication information included in the authentication information region 243 of the data 240, the data in the protected data region 241 for any possibility of data tampering or data error. To be specific, the authentication information region 243 includes a signature as the result of hashing the protected data region 241, and then encrypting the result using a private key, and a public key which pairs off with the private key. The signature authentication section 202 extracts the signature and the public key from the authentication information region 243, and then decrypts the signature using the public key. Then, the decryption result is compared with the result of hashing the protected data region 241, and if those are the same, it means that the data in the protected data region 241 is correct, i.e. , the data has not been tampered or no data error has occurred thereto. If so, the signature authentication section 202 outputs, to the unprotected data authentication section 203, both the data in the protected data region 241 and the data in the unprotected data region 242.

The unprotected data authentication section 203 refers to the unprotection list 245 in the protected data region 241 for checking whether correctly showing the data type listing of the unprotected data region 242. Here, the unprotection list 245 itself has been confirmed as being correct by the signature authentication section 202. Therefore, in the case where the unprotected data region 242 includes any data type not listed in the unprotection list 245, it means that some data tampering or data error has occurred to the unprotected data region 242 and thus data type change has followed, or the data is not needed by the application section 204. Accordingly, the unprotected data authentication section 203 discards such type of data not listed in the unprotection list 245, and outputs the rest of the data whose type is listed in the unprotection list 245 from the unprotected data region 242 to the application section 204 together with the data in the protected data region 241.

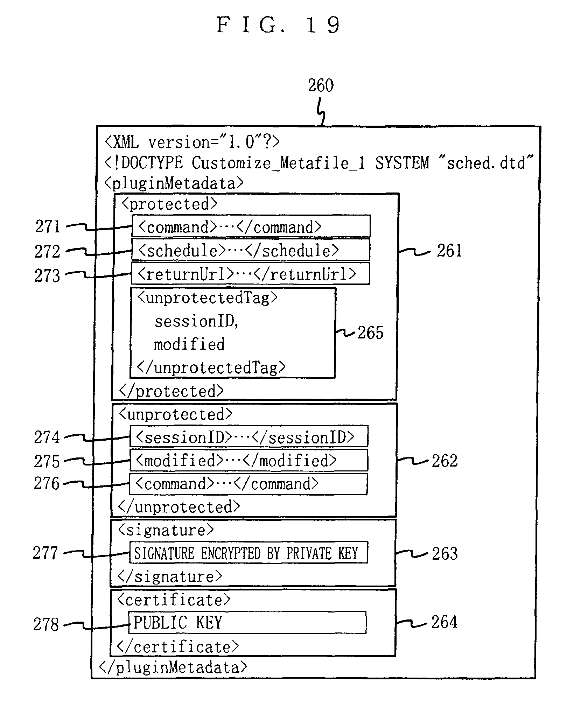

In the below, further descriptions are given while exemplifying the received data as being hypertext. FIG. 19 shows an example of the data 240, i.e., text data 260, to be processed by the data processor 200. The text data 260 of FIG. 19 is data for schedule update written in XML. Assuming here is, using XML of the present embodiment results in tagging the digital signature using public key cryptosystem.

In FIG. 17, the server 1c and the data processor 200 presumably work together to manage one schedule data. The schedule data is presumably stored separately in the server 1c and the data processor 200, and updated as appropriate. In this system, the server 1c and the data processor 200 have to establish a synchronization therebetween to keep the schedule data the same. For the purpose, the data processor 200 as a client, requests the server 1c to establish such a synchronization therewith. In response, the server 1c forwards such text data 260 as shown in FIG. 19 to the data processor 200. The text data 260 includes an update operation command, the schedule data, update information about day and time, a session ID of the current update session, and the like. Here, the update operation command indicates which of the server and the client is prioritized for schedule update.

In the text data 260, any part between <character string X> and </character string X> is referred to as an "X tag". A protected tag 261 corresponds to the protected data region 241 of FIG. 18. An unprotected tag 262 corresponds to the unprotected data region 242 of FIG. 18. A signature tag 263 and a certificate tag 264 correspond to the authentication information region 243 of FIG. 18. The signature tag 263 includes a signature 277. The signature 277 is the one derived by hashing the protected tag 261 being the protected data region, and by encrypting the resultant hash value using a private key on the transmission end. The certificate tag 264 includes a public key 278 which pairs off with the private key on the transmission end. The protected tag 261 includes an unprotectedTag tag 265. The unprotectedTag tag 265 shows a listing of data type included in the unprotected tag 262, which is the unprotected data region. Here, the unprotectedTag tag 265 corresponds to the unprotection list 245 of FIG. 18.

The protected tag 261 corresponding to the protected data region 241 carries data which should not be tampered. In the schedule update data shown in FIG. 19, regarded as such data not to be tampered are the update operation command, the schedule data, and a return URL for forwarding the next request to the server. Thus, the protected tag 261 carries a command tag 271 including the update operation command, a schedule tag 272 including the schedule data, and a returnUrl tag 273 including the return URL.

On the other hand, the unprotected tag 262 corresponding to the unprotected data region 242 carries temporary information which is allowed for tampering. In the schedule update data of FIG. 19, regarded as such data are the session ID and the update information about day and time. Thus, the unprotected tag 262 carries a sessionID tag 274 including the session ID, and a modified tag 275 including the update information about day and time. Here, as a result of data tampering, a command tag 276 is assumed to be located in the unprotected tag 262.

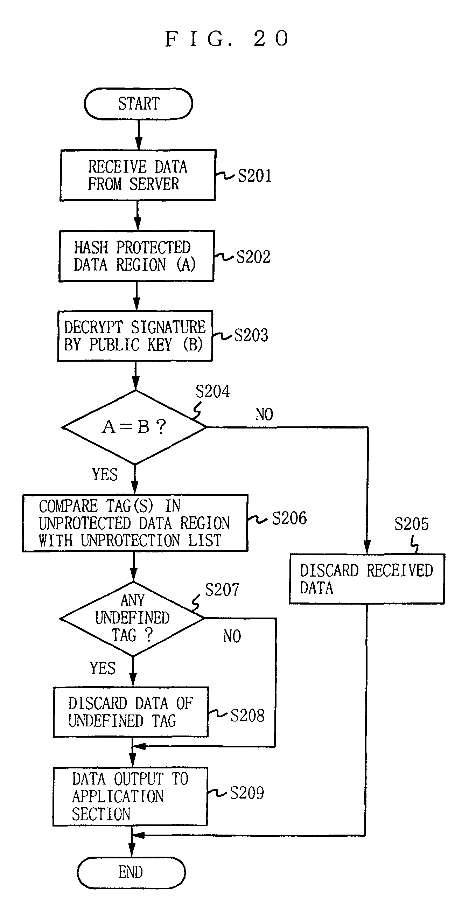

Referring to FIG. 20, described next is the operation of the data processor 200 for outputting the received data to the application section 204. First, the reception section 201 receives data from the server 1c connected to the communications network 10 (step S201). In the below, exemplified is a case where the text data 260 of FIG. 19 is received.

Next, the signature authentication section 202 hashes the protected tag 261 corresponding to the protected data region 241 (step S202). The signature authentication section 202 then uses the public key 278 to decrypt the signature 277 (step S203). Here, the signature authentication section 202 may execute steps S202 and S203 in reverse order. The signature authentication section 202 compares the decryption result of the signature 277 with the hash value calculated in step S202 (step S204). If those are not the same (No in step S204), the received data is determined as not being reliable due to some data tampering or error occurred to the protected data region. In this case, the signature authentication section 202 discards the received data (step S205). Then, the data processor 200 ends the process for the received data without outputting it to the application section 204.

If those two data are the same in step S204 (YES in step S204), the signature authentication section 202 outputs, to the unprotected data authentication section 203, the unprotectedTag tag 265 in the protected tag 261, and the unprotected tag 262. Thereafter, the unprotected data authentication section 203 refers to the unprotectedTag tag 265 for checking whether carrying all of the tags included in the unprotected tag 262. If there is any tag (undefined tag) not found in the unprotectedTag tag 265 which is the one corresponding to the unprotection list 245 (YES in step S207), it means that the tag has been tampered or is not needed by the application section 204. If so, the unprotected data authentication section 203 discards data included in such undefined tag(s) (step S208).

The unprotected data authentication section 203 outputs, to the application section 204, the data included in the protected tag 261, and the data in the unprotected tag 262 (step S208). Here, the data in the protected tag 261 has been confirmed as not been tampered. Among the data included in the unprotected tag 262, any data whose type is not found in the unprotectedTag tag 265 has been eliminated due to effects of the unprotected data authentication section 203.

In the text data 260, "SESSIONID" which is the data type of the sessionID tag 274, and "MODIFIED" which is the data type of the modified tag 275 are included in the unprotectedTag tag 265. Thus, the sessionID tag 274 and the modified tag 275 are both outputted to the application section 204. On the other hand, "COMMAND" which is the data type of the command tag 276 is not included in the unprotectedTag tag 265. It means that the command tag 276 might have been tampered, and thus the data is determined as not reliable. Therefore, the unprotected data authentication section 203 discards the command tag 276 without outputting it to the application section 204.

Here, as to the data provided by the unprotected data authentication section 203, the application section 204 has no need to know which of the protected data region and the unprotected data region has included the data. This is because, by then, the tags have been confirmed as being correct due to the effects of the signature authentication section 202 and the unprotected data authentication section 203, and the data included in the unprotected data region is the one originally allowed for tampering. If data tampering is partially allowed, the data type may be eliminated from the unprotection list, and the data may be allocated to the protected data region.

As such, according to the data processor of the present embodiment, the unprotection list provided in the protected data region shows types of data included in the unprotected data region. When the data is hypertext, the unprotection list also shows the types of tags included in the unprotected data region. Any data (or tag) type included in the unprotected data region but not listed in the unprotection list is not provided to the application execution section. In this manner, compared with the case where the data is subjected to data signature in its entirety, the data amount to be used for signature authentication can be reduced, successfully improving the efficiency for signature authentication. Moreover, since only the data (or tag) whose type is found in the unprotection list is forwarded to the application section, the data (or tag) included in the unprotected data region can be increased in reliability. Further, the application section has no need to know whether the data (or tag) has been included in which of the protected data region or the unprotected data region for processing the received data. As a result, the application section can be reduced in processing amount, thereby rendering the processing speed increased.

### (Fourth Embodiment)

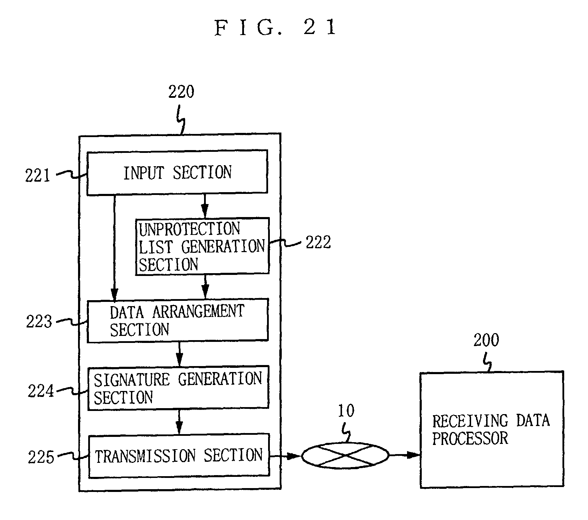

FIG. 21 is a block diagram showing the structure of a data processor 220 according to the fourth embodiment of the present invention. As shown in FIG. 21, to the communications network 10, the data processors 200 and 220 are both connected. In the below, for distinction therebetween, the data processor 220 is referred to as a transmitting data processor, while the data processor 200 as a receiving data processor. The receiving data processor 200 is the data processor according to the third embodiment, and the transmitting data processor 220 generates the data 240 of FIG. 18 for transmission.

As shown in FIG. 21, the transmitting data processor 220 includes an input section 221, an unprotection list generation section 222, a data arrangement section 223, a signature generation section 224, and a transmission section 225. The input section 221 is used to input data to be transmitted, and its data type to be listed in the unprotection list 245. Based on the data type included in the unprotected data region 242, the unprotection list generation section 222 generates the unprotection list 245. According to thus generated unprotection list 245, the data arrangement section 223 arranges the transmitting data into the protected data region 241 and the unprotected data region 242. For the data included in the protected data region 241, the signature generation section 224 generates the authentication information region 243 for detecting any possibility of data tampering. The transmission section 225 forwards the data to the receiving data processor 200 connected to the communications network 10.

For data transfer from the transmitting data processor 220 to the receiving data processor 200, inputted into the input section 221 in the transmitting data processor 220 is the data type found in the unprotected data region 242. Based on the data type coming from the input section 221, the unprotection list generation section 222 accordingly generates the unprotection list 245. The resultant unprotection list 245 is handled as data to be arranged in the protected data region 241.

Based on the resultant unprotection list 245, the data arrangement section 223 determines to which of the protected data region 241 and the unprotected data region 242 the transmitting data is to be arranged. The data arrangement section 223 follows the determination to arrange the transmitting data either in the protected data region 241 or the unprotected data region 242. Specifically, the data arrangement section 223 arranges the data into the unprotected data region 242 when its data type is found in the unprotection list 245, and otherwise into the protected data region 241.

The signature generation section 224 hashes the data included in the protected data region 241 together with the unprotection list 245, and encrypts the resultant hash value using a private key. The resultant value will be the signature for the transmitting data. The signature generation section 224 arranges a public key which pairs off with the private key and the resultant signature to the authentication information region 243 of the transmitting data. In this manner, the transmitting data is affixed with the signature. The transmission section 225 forwards thus signed data to the receiving data processor 200. The receiving data processor 200 operates in the similar manner in the third embodiment.

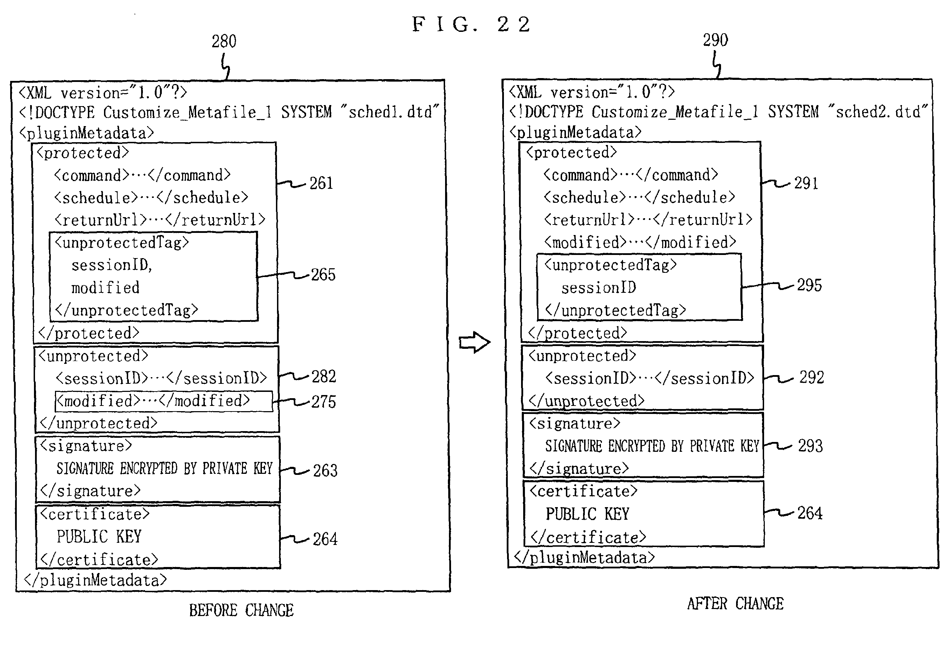

In the below, further descriptions are given while exemplifying a case where the data to be transferred is hypertext. FIG. 22 shows an example of the data 240, i.e., text data 280 and 290, to be processed by the transmitting data processor 220. The text data 280 and 290 of FIG. 22 are, as the text data 260 of FIG. 19, data for schedule update written in XML. Here, as in the third embodiment, using XML of the present embodiment results in tagging the digital signature made by public key cryptosystem, and the conditions in which the text data 280 and 290 are used, and the meaning of the tags included in the text data 280 and 290 are the same as the third embodiment. In FIG. 22, any component identical to that in the third embodiment is under the same reference numeral, and not described again.

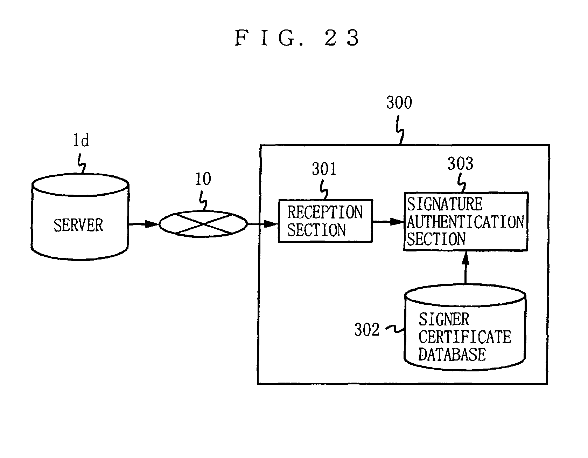

Described next is a case where the modified tag 275 in the text data 280 is changed in state, from unprotected to protected. To the input section 221 of FIG. 21, inputted is the data type to be included in the unprotected data region. At this time, the type of the modified tag 275 is not inputted as the data type to be included in the unprotected data region. The unprotection list to be generated by the unprotection list generation section 222 thus include no "MODIFIED" which is the data type of the modified tag 275. In FIG. 23, an unprotectedTag tag 295 corresponds to the resultant unprotection list. Based on such an unprotection list, the data arrangement section 223 rearranges the modified tag 275 which has been arranged in the unprotected tag 282 corresponding to the unprotected data region into a protected tag 291 corresponding to the protected data region. The signature generation section 224 hashes the protected tag 291 to derive a signature to be included in a signature tag 293. The signature tag 293 and the certificate tag 264 structures the authentication information region. The signature generation section 224 adds thus generated authentication information region to the transmitting data. In this manner, the data 290 can be derived in which data has been partially changed in state. The transmission section 225 forwards thus derived data 290 to the receiving data processor 200.

As described in the above, according to the data processor of the present embodiment, the data type whatever included in the unprotected data region is first inputted, and in accordance therewith, the unprotection list is generated and arranged into the protected data region. When the data is hypertext, the unprotection list shows also the tag type whatever included in the unprotected data region. Based on the resultant unprotection list, the transmitting data (or tag) is determined to which region to go, i.e., the protected data region or unprotected data region. Thus, the data (or tag) can be changed in state as appropriate, from unprotected to protected and vice versa, with exactly the same processes for the application section in the receiving data processor or any other processes. Consequently, data handling can be freely changed.

Similarly to the third embodiment, compared with the case where the data is subjected to digital signature in its entirety, the data amount for signature authentication can be reduced, improving the efficiency in signature authentication. Moreover, the data (or tag) in the unprotected data region can be increased in reliability, and the application section in the receiving data processor has no need to make it clear which data region has included the data (or tag), i.e., the protected data region or the unprotected data region, to process the data (or tag) .

In the third and fourth embodiments, as shown in FIG. 18, the protected data region 241, the unprotected data region 242, and the authentication information region 243 are arranged in order as shown in FIG. 18. Alternatively, those regions may be arranged in any arbitrary order as long as those remain distinguishable. Further, as are any other data in the protected data region 241, the unprotection list 245 in the protected data region 241 is not limited in arrangement position as long as it will be subjected to signature authentication.

In the case where the data is hypertext, as shown in FIGS. 19 and 22, the unprotection list 245 includes the tag type whatever included in the unprotected data region 242. Instead of the tag type(s) , the tag(s) themselves may be included, or any other representations (e.g., tag IDs or representations in meta languages for sets of tags) as long as those remain identifiable as not to be protected.

In the fourth embodiment, inputted into the input section 221 is data type (or tag type) to be listed in the unprotection list 245. This is not restrictive, and inputted into the input section 221 may be data type (or tag type) included in the protected data region. This is because information provided by the input section 221 only needs to identify what data (or tag) is to be arranged to which data region, i.e. , the protected data region or the unprotected data region. Alternatively, the unprotection list generation section 222 may be provided with a storage section for storing the data type (or tag type) whatever included in the unprotection list 245, and the input section 221 may receive any data (or tag) type only those changed in the current process.

### (Fifth Embodiment)

FIG. 23 is a block diagram showing the structure of a data processor 300 according to the fifth embodiment of the present invention. As shown in FIG. 23, to the communications network 10, a server 1d and the data processor 300 are connected. The server 1d stores data written in HTML, or XML, for example, and image data, and forwards data responding to a request coming from the data processor 300. In this sense, the server 1d and the data processor 300 may be referred to be as a content server and a content processor.

As shown in FIG. 23, the data processor 300 includes a reception section 301, a signer certificate database 302, and a signature authentication section 303. The reception section 301 receives data from the server 1d connected to the communications network 10. The signer certificate database 302 stores signer certificates. The signature authentication section 303 searches the signer certificate database 302 for a signer certificate corresponding to the received data, and by using thus acquired signer certificate, authenticates the signature applied to the received data.

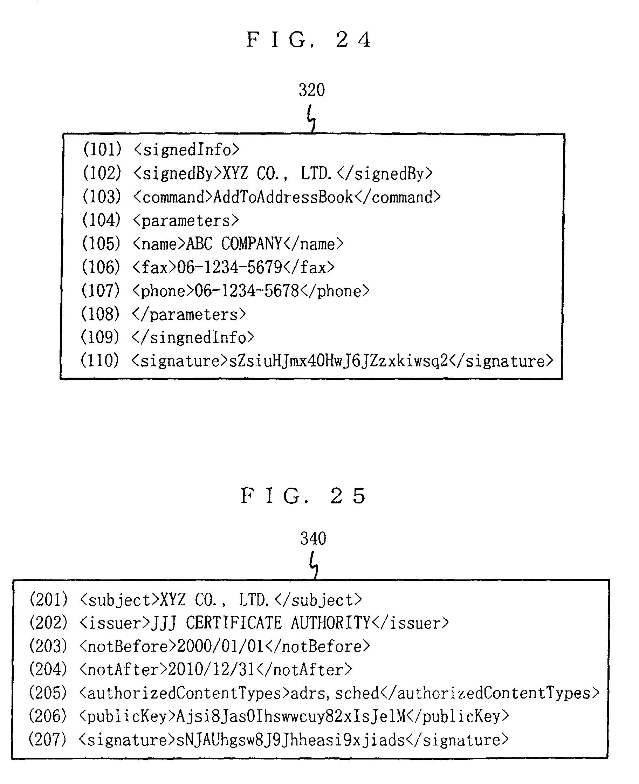

FIG. 24 shows an example of data to be received from the server 1d and processed by the data processor 300. In the below, such data is referred to as a "content". FIG. 25 shows an example of the signer certificate stored in the signer certificate database 302. In a content 320 of FIG. 24 and a signer certificate 340 of FIG. 25, similarly to XML, tag names and information corresponding to the tags are represented in a format of "<tag name> information </tag name>". Alternatively, the information corresponding to the tags may be represented in such a format of "<tag name> information </tag name>". Using such a format will result in information hierarchically represented. For reference in the below, the content 320 and the signer certificate 340 both carry, on a row basis, line numbers in a format of (number N).

The server 1d stores the content 320 of FIG. 24, and others. The server 1d receives a content request from the data processor 300, and responsively forwards the requested content back to the data processor 300. After receiving the content, the data processor 300 authenticates the content in the following manner before processing the same. In the below, the operation of the signature authentication section 303 is described while assuming that the data processor 300 receives the content 320.

The signature authentication section 303 first extracts a signer's name included in a signedBy tag under the line number (102) in the content 320. Accordingly, "XYZ. Co., LTD." is extracted as the signer's name. Then, the signature authentication section 303 retrieves, from the signer certificate database 302, a signer certificate corresponding the extracted signer's name. To be specific, the signature authentication section 303 searches the signer certificate database 302 for a signer certificate whose value of a subject tag is the same as the value of the signdBy tag in the content. Here, after searching the signer certificate database 302 as such, the signer certificate 340 of FIG. 25 is presumed to be retrieved.

The signature authentication section 303 then checks whether the type of the received content 320 is included in the value of an authorizedContentTypes tag under the line number (205) in the signer certificate 340. The value of the authorizedContentTypes tag in the signer certificate 340 includes two content types as "adrs" and "sched". In this example, the content type is presumably determined by a characteristic part of a URI (Uniform Resource Identifier), more specifically by an extension of a URI of the content. Accordingly, if the extension of the URI of the received content is either "adrs" or "sched", the signature authentication section 303 determines that the signer is authorized to sign the received content.

For example, when the extension of the URI of the received content is "adrs", the signature authentication section 303 uses a public key included in the signer certificate 340 to authenticate the digital signature of the content 320. The public key here is the one set as a value of a publicKey tag under the line number (206) in the signer certificate 340. The digital signature to be authenticated is the one set as a value of the signature tag under the line number (110) of the content 320.

To be specific, from the content 320, the signature authentication section 303 extracts character strings under the line numbers from (102) to (108), which are values of a signedInfo tag under the line numbers (101) to (109). With respect to those extracted character strings, the signature authentication section 303 applies such hash algorithm as MD5. Then, the signature authentication section 303 retrieves the public key found under the line number (206) in the signer certificate 340, and the digital signature written as the value of the signature tag under the line number (110) of the content 320. The signature authentication section 303 then decrypts the digital signature using the public key. The resultant value is then compared with the derived hash value. If these are the same, the digital signature is determined as valid, and otherwise determined as invalid and the received content will be discarded.

As such, according to the data processor of the present embodiment, the signer certificate indicates by the content type whether the signer has an authorization for signing the content. Accordingly, in the same manner for determining such authorization for signature, any new contents in any new applications can be appropriately dealt with.

In the present embodiment, the content type is defined by the extension of the URI of the content. Instead, the content type may be specified by content identifying information which is included in header information at the time of content reception. Alternatively, the authorizedContentTypes tag in the signer certificate may be allowed to carry, as its value, an asterisk (*) which indicates a wildcard, and the data processor 300 may accordingly determine that any signer corresponding to such an signer certificate may have an authorization for signing any type of contents.

Further, when receiving a content from the server 1d, the data processor 300 may also receive a signer certificate together therewith from the server 1d. If so, with respect to any signers not included in the signer certificate database 302, the data processor 300 becomes capable of checking their authorization. In such a case, certificate authorities may in advance sign the signer certificates to enable the data processor 300 to detect their validity when coming from the server 1d.

While the invention has been described in detail, the foregoing description is in all aspects illustrative and not restrictive. It is understood that numerous other modifications and variations can be devised without departing from the scope of the invention.

## Claims

1. A data processor (100) which is supplied with command data (111) specifying a data component (112) to be used for controlling itself, and operates based on said command data (111), said data processor comprising:
transmission/reception means (102) for transmitting/receiving data to/from a server (1) connected over a network (10);
validity determination means (106) for determining whether said command data (111) is valid;
command data processing means (107) for retrieving, when said command data (111) is determined as valid by said validity determination means (106), the data component (112) specified by said command data (111) from said server (1) using said transmission/reception means (102); and
data component processing means (109) for controlling said data processor (100) based on the data component (112) retrieved by said command data processing means (107).

2. The data processor (100) according to claim 1, wherein said data component processing means (109) performs screen display based on the data component (112) retrieved by said command data processing means (107).

3. The data processor (100) according to claim 1, wherein said data component processing means (109) outputs the data component (112) retrieved by said command data processing means (107) to outside of said data processor (100).

4. The data processor (100) according to claim 1, wherein the data component (112) used for controlling said data processor (100) by said data component processing means (109) is limited to be the data component retrieved by said command data processing means (107).

5. The data processor (100) according to claim 1, wherein
said command data (111) is encrypted, and
said validity determination means (106) determines whether said command data (111) is valid after decrypting the same.

6. The data processor (100) according to claim 1, wherein said command data processing means (107) determines whether the data component (112) retrieved from said server (1) is valid, and if determined valid, supplies the data component (112) to said data component processing means (109).

7. The data processor (100) according to claim 1, wherein said command data processing means (107) includes a language processing section for interpreting a JAVA language, and a JAVA applet to be processed by said language processing section.

8. The data processor (100) according to claim 7, wherein said transmission/reception section (102) receives, in accordance with a user's instruction, the JAVA applet included in said command data processing means (107).

9. The data processor (100) according to claim 1, wherein said transmission/reception means (102) receives, in accordance with a user's instruction, said command data (111) for supply to said validity determination means (106).

10. A data processor (120) which is supplied with command data (131) including a data component (132) used for controlling itself, and operates based on said command data (131), said data processor comprising:
transmission/reception means (102) for transmitting/receiving data to/from a server (1) connected over a network (10) ;
validity determination means (106) for determining whether said command data (131) is valid;
command data processing means (127) for retrieving, when said command data (131) is determined as valid by said validity determination means (106), the data component (132) included in said command data (131); and
data component processing means (129) for controlling said data processor (120) based on the data component (132) retrieved by said command data processing means (127).

11. The data processor (120) according to claim 10, wherein said data component processing means (129) performs screen display based on the data component (132) retrieved by said command data processing means (127).

12. The data processor (120) according to claim 10, wherein said data component processing means (129) outputs the data component (132) retrieved by said command data processing means (127) to outside of said data processor (120).

13. The data processor (120) according to claim 10, wherein the data component (132) used for controlling said date processor (120) by said data component processing means (129) is limited to be the data component retrieved by said command data processing means (127).

14. The data processor (120) according to claim 10, wherein
said command data (131) is encrypted, and
said validity determination means (106) determines whether said command data (131) is valid after decrypting the same.

15. The data processor (120) according to claim 10, wherein said command data processing means (127) includes a language processing section for interpreting a JAVA language, and a JAVA applet to be processed by said language processing section.

16. The data processor (120) according to claim 15, wherein said transmission/reception section (102) receives, in accordance with a user's instruction, the JAVA applet included in said command data processing means (127).

17. The data processor (120) according to claim 10, wherein said transmission/reception means (102) receives, in accordance with a user's instruction, said command data (131) for supply to said validity determination means (106).

18. A data processing method in which command data specifying a data component to be used for controlling a data processor is supplied, and said command data is used as a basis for an operation, said method comprising:
a transmission/reception step of transmitting/receiving data to/from a server connected over a network;
a validity determination step of determining whether said command data is valid;
a command data processing step of retrieving, when said command data is determined as valid in said validity determination step, the data component specified by said command data from said server by calling for said transmission/reception step; and
a data component processing step of controlling said data processor based on the data component retrieved in said command data processing step.

19. A data processing method in which command data including a data component used for controlling a data processor is supplied, and said command data is used as a basis for an operation, said method comprising:
a transmission/reception step of transmitting/receiving data to/from a server connected over a network;
a validity determination step of determining whether said command data is valid;
a command data processing step of retrieving, when said command data is determined as valid in said validity determination step, the data component included in said command data; and
a data component processing step of controlling said data processor based on the data component retrieved in said command data processing step.

20. A data processor (200) for receiving and processing data (240) to which information for tampering detection is added, said data processor comprising:
reception means (201) for receiving data (240) which includes an authentication information region (243) for including the tampering detection information, a protected data region (241) for including data to be subjected to tampering detection, and an unprotected data region (242) for including data not to be subjected to tampering detection, wherein said protected data region (241) includes an unprotection list (245) which lists, by type, the data included in said unprotected data region (242) ;
protected data authentication means (202) for detecting, for the data (240) received by said reception means (201), whether the data included in said protected data region (241) has been tampered by using the tampering detection information included in said authentication information region (243); and
unprotected data authentication means (203) for authenticating, for the data (240) received by said reception means (201), whether the data included in said unprotected data region (242) is valid based on said unprotection list (245) which has been confirmed as not having been tampered by said protected data authentication means (202).

21. The data processor (200) according to claim 20, wherein
the data (240) received by said reception means (201) is hypertext, and
said unprotection list (245) lists, by type, a tag included in said unprotected data region (242).

22. A data processor (200, 220) structured by a transmitting data processor (220) and a receiving data processor (200), wherein the transmitting data processor (220) transfers, to the receiving data processor (200), data to which information for tampering detection is added, wherein
said transmitting data processor (220) comprises:
unprotection list generation means (222) for generating an unprotection list (245) which lists, by type, data not to be subjected to tampering detection;
data generation means (223, 224) for generating data (240) to be transmitted by arranging data to be subjected to tampering detection in a protected data region (241) together with said unprotection list (245), the data not to be subjected to tampering detection in an unprotected data region (242), and the tampering detection information derived based on the data in said protected data region (241) in an authentication information region (243); and
transmission means (225) for transmitting the data (240) generated by said data generation means (223, 224), and
said receiving data processor (200) comprises:
reception means (201) for receiving the data (240) transmitted from said transmitting data processor (220);
protected data authentication means (202) for detecting, for the data (240) received by said reception means (201), whether the data in said protected data region (241) has been tampered by using the tampering detection information in said authentication information region (243); and
unprotected data authentication means (203) for authenticating, for the data (240) received by said reception means (201), whether the data included in said unprotected data region (242) is valid based on said unprotection list (245) which has been confirmed as not having been tampered by said protected data authentication means (202).

23. The data processor (200, 220) according to claim 22, wherein
the data (240) generated by said data generation means (223, 224) is hypertext, and
said unprotection list (245) lists, by type, a tag included in said unprotected data region (242).

24. A data processing method for receiving and processing data to which information for tampering detection is added, said method comprising:
a reception step of receiving data which includes an authentication information region for including the tampering detection information, a protected data region for including data to be subjected to tampering detection, and an unprotected data region for including data not to be subjected to tampering detection, wherein said protected data region includes an unprotection list which lists, by type, the data included in said unprotected data region;
a protected data authentication step of detecting, for the data received in said reception step, whether the data included in said protected data region has been tampered by using the tampering detection information included in said authentication information region; and
an unprotected data authentication step of authenticating, for the data received in said reception step, whether the data included in said unprotected data region is valid based on said unprotection list which has been confirmed as not having been tampered in said protected data authentication step.

25. A data processing method for transferring data to which information for tampering detection is added from a transmitting data processor to a receiving data processor, wherein
said transmitting data processor performs:
an unprotection list generation step of generating an unprotection list which lists, by type, data not to be subjected to tampering detection;
a data generation step of generating data to be transmitted by arranging data to be subjected to tampering detection in a protected data region together with said unprotection list, the data not to be subjected to tampering detection in an unprotected data region, and the tampering detection information derived based on the data in said protected data region in an authentication information region; and
a transmission step of transmitting the data generated in said data generation step, and
said receiving data processor performs:
a reception step of receiving the data transmitted from said transmitting data processor;
a protected data authentication step of detecting, for the data received in said reception step, whether the data in said protected data region has been tampered by using the tampering detection information in said authentication information region; and
an unprotected data authentication step of authenticating, for the data received in said reception step, whether the data included in said unprotected data region is valid based on said unprotection list which has been confirmed as not having been tampered in said protected data authentication step.

26. A data processor (300) for receiving and processing data (320) with a digital signature, comprising:
reception means (301) for receiving the data (320) with the digital signature from a server (1) connected over a network (10) ;
signer certificate acquiring means (302) for acquiring a signer certificate (340) indicating, by type, what data is signable by a signer of the data (320) received by said reception means (301); and
signature authentication means (303) for determining, when the signer certificate (340) acquired by said signer certificate acquiring means (302) indicates, by type, the data (320) received by said reception means (301), that a signature applied to the data as valid.

27. The data processor (300) according to claim 26, wherein said signer certificate (340) can include, in a list, by type, a plurality of the signable data.

28. The data processor (300) according to claim 26, wherein said signer certificate (340) can include a wildcard as a type of the signable data, and
when the signer certificate (340) acquired by said signer certificate acquiring means (302) includes the wildcard as the type of the signable data, said signature authentication means (303) determines that the signature applied to any data received in said reception means (301) as valid.

29. The data processor (300) according to claim 26, wherein said signature authentication means (303) acquires a type of the data based on a characteristic part of a URI (Uniform Resource Identifier) of the data (320) received by said reception means (301).

30. The data processor (300) according to claim 26, wherein said signature authentication means (303) acquires the type of the data (300) based on a header part of the data received by said reception means (301).

31. The data processor (300) according to claim 26, wherein said signer certificate acquiring means (303) receives said signer certificate (340) by using said reception means (301).

32. A data processing method for receiving and processing data with a digital signature, comprising:
a reception step of receiving the data with the digital signature from a server connected over a network;
a signer certificate acquiring step of acquiring a signer certificate indicating, by type, what data is signable by a signer of the data received in said reception step; and
a signature authentication step of determining, when the signer certificate acquired in said signer certificate acquiring step indicates, by type, the data received in said reception step, that a signature applied to the data as valid.
